# EUROPÄISCHE PATENTSCHRIFT

(11) **EP 2 673 113 B1**
(45) Veröffentlichungstag und Bekanntmachung des Hinweises auf die Patenterteilung: **30.12.2015**
(21) Anmeldenummer: 12700839.9
(22) Anmeldetag: 20.01.2012
(51) Int. Cl.: B23Q 11/10, B23C 3/06, B23C 5/28

(54) **BEARBEITUNGSEINRICHTUNG ZUM BEARBEITEN VON KURBELWELLEN MIT KRYOGENEM KÜHLMEDIUM**
MACHINING DEVICE FOR MACHINING CRANKSHAFTS USING A CRYOGENIC COOLING MEDIUM
DISPOSITIF D'USINAGE DE VILEBREQUINS UTILISANT UN LIQUIDE CRYOGÉNIQUE

(30) Priorität: 07.02.2011 DE 102011003714
(43) Veröffentlichungstag der Anmeldung: 18.12.2013
(73) Patentinhaber: MAG IAS GmbH, 73033 Göppingen (DE)
(72) Erfinder: MEIDAR, Moshe, Israel, Miami, FL 33131 (US); HORN, Wolfgang, 73035 Göppingen (DE); LANG, Heiner, 73728 Esslingen (DE); KOLB, Holger, 71636 Ludwigsburg (DE); SCHARPF, Paul, Dieter, 73114 Schlat (DE)
(74) Vertreter: Rau, Schneck & Hübner Patentanwälte Rechtsanwälte PartGmbB
(86) Internationale Anmeldenummer: PCT/EP2012/050884
(87) Internationale Veröffentlichungsnummer: WO 2012/107267

(56) Entgegenhaltungen:
- EP-A2- 0 252 312
- WO-A1-03/035322
- DE-A1- 10 145 006
- DE-C1- 19 626 627
- GB-A- 820 308
- US-A- 3 971 114
- US-A1- 2010 254 772

## Beschreibung

Die Erfindung betrifft eine Bearbeitungseinrichtung zum Bearbeiten von Kurbelwellen gemäß dem Oberbegriff des Anspruchs 1. Ferner betrifft die Erfindung ein Bearbeitungssystem mit einer derartigen Bearbeitungseinrichtung. Das Bearbeitungssystem ist insbesondere Teil einer Werkzeugmaschine zum Bearbeiten von Kurbelwellen für Verbrennungsmotoren.

Bei der Herstellung von Kurbelwellen werden die Kurbelwellen-Rohlinge in mehreren Schritten spanend bearbeitet. Übliche Bearbeitungsverfahren sind beispielsweise das Dreh-Räumen, das Dreh-Dreh-Räumen oder das Außenfräsen. Die Kurbelwellen werden trocken bearbeitet.

Aus der DE 101 45 006 A1 ist ein Scheibenfräser bekannt, der mehrere umfangsseitig an einem scheibenförmigen Halter angeordnete Schneideinsätze aufweist. In dem Halter erstrecken sich mehrere Kühlmittelkanäle parallel zu einer Drehachse, die jeweils in radiale Kühlmittelkanäle münden, die im Bereich der Schneideinsätze Kühlmittelauslassöffnungen aufweisen.

Aus der EP 0 252 312 A2 ist ein Roboter bekannt, dessen Bearbeitungszone mit flüssigem Stickstoff gekühlt wird. Der flüssige Stickstoff wird über einen isolierten Schlauch außerhalb des Roboters zu der Bearbeitungszone geleitet.

Aus der WO 03/035 322 A1 ist eine Verbindungseinrichtung zur Zuführung eines kryogenen Kühlmediums bekannt, bei der die Verbindungsteile mittels eines Linearaktuators verbunden bzw. getrennt werden. Die Verbindungsteile weisen unterschiedliche Wärmeausdehnungskoeffizienten auf, sodass die Verbindungsstelle durch das Zuführen des kryogenen Kühlmediums abgedichtet wird.

Aus der DE 196 26 627 C1 ist eine Fräsmaschine zur Bearbeitung von Kurbelwellen bekannt.

Aus der GB 820 308 A ist eine Werkzeugmaschine mit einem rotierenden Werkzeug bekannt, dessen Schneiden mittels flüssigem Kohlendioxid als Kühlmittel gekühlt werden. Das Kühlmittel wird über ein konzentrisch zu der Drehachse angeordnetes Rohr und Zuführleitungen zu den Schneiden geführt, wobei im Bereich der Schneiden ein jeweiliges Kugelventil angeordnet ist, das die jeweilige Zuführleitung öffnet, wenn die Schneide in Eingriff mit dem Werkstück ist. Zur Verteilung des Kühlmittels mündet das Rohr in eine Ringnut, von der aus sich die Zuführleitungen zu den Schneiden erstrecken.

Aus der US 2010/0254772 A ist ein Schneidwerkzeug bekannt, bei dem unterhalb eines Schneideinsatzes ein Wärmetauscher angeordnet ist. Der Wärmetauscher erstreckt sich in einen Aufnahmeraum, in den zur Kühlung des Schneideinsatzes ein kryogenes Kühlmittel zugeführt wird.

Aus der US 3 971 114 A ist ein Schneidwerkzeug bekannt, das mit einem kryogenen Kühlmittel gekühlt wird.

Der Erfindung liegt die Aufgabe zugrunde, eine Bearbeitungseinrichtung zu schaffen, die eine höhere Produktivität und Wirtschaftlichkeit beim Bearbeiten von Kurbelwellen ermöglicht.

Diese Aufgabe wird durch eine Bearbeitungseinrichtung mit den Merkmalen des Anspruchs 1 gelöst. Durch die Zuführleitungen kann ein kryogenes Kühlmedium im Inneren der Bearbeitungseinrichtung bis unmittelbar zu denjenigen Schneideinsätzen bzw. Schneiden geführt werden, die bei der Bearbeitung einer Kurbelwelle gerade mit dieser in Eingriff sind. Dadurch, dass das kryogene Kühlmedium unmittelbar an den Schneideinsätzen bzw. Schneiden zugeführt wird und diese aufgrund der geringen Temperatur des kryogenen Kühlmediums äußerst effektiv gekühlt werden, sind höhere Schnittgeschwindigkeiten bei der Kurbelwellenbearbeitung möglich. Das kryogene Kühlmedium wirkt sich zudem positiv auf die Standzeiten der Schneideinsätze aus. Die Produktivität und Wirtschaftlichkeit kann dementsprechend durch das direkte Zuführen des kryogenen Kühlmediums zu den Schneideinsätzen bzw. Schneiden erhöht werden.

Mittels der Verteilereinheit wird die erste Zuführleitung in Abhängigkeit der Drehstellung des Werkzeuges mit mindestens einer der zweiten Zuführleitung gekoppelt, deren zugehöriger Schneideinsatz bzw. zugehörige Schneideinsätze gerade mit der zu bearbeitenden Kurbelwelle in Eingriff sind. Hierdurch wird vermieden, dass das kryogene Kühlmedium unnötig an Schneideinsätze geleitet wird, die gerade nicht in Eingriff mit der zu bearbeitenden Kurbelwelle sind und dementsprechend nicht gekühlt werden müssen. Dies verbessert die Wirtschaftlichkeit. Durch die thermisch isolierend ausgebildeten Zuführleitungen wird weiterhin verhindert, dass sich das kryogene Kühlmedium auf dem Weg zu den Schneideinsätzen unerwünscht erwärmt, und dass sich die die Zuführleitungen umgebenden Bauteile der Bearbeitungseinrichtung unzulässig abkühlen, so dass keine thermischen Spannungen in diesen Bauteilen entstehen können. Da das kryogene Kühlmedium zudem verdampft, werden weder die bearbeiteten Kurbelwellen noch die Bearbeitungseinrichtung bzw. die gesamte Werkzeugmaschine verschmutzt.

Die Zuführleitungen und die Verteilereinheit sind derart ausgebildet, dass das kryogene Kühlmedium an den Schneideinsätzen eine Temperatur von weniger als -60° C, insbesondere von weniger als -120° C, insbesondere von weniger als -150° C, und insbesondere von weniger als -180° C aufweist. Als kryogenes Kühlmedium kann beispielsweise flüssiger oder gasförmiger Stickstoff, flüssiger oder gasförmiger Sauerstoff, gasförmiger Wasserstoff, gasförmiges Helium, flüssiges oder gasförmiges Argon, gasförmiges Kohlendioxid und flüssiges oder gasförmiges Erdgas dienen. Vorzugsweise wird Stickstoff durch die Zuführleitungen zu den Schneideinsätzen geführt. Die erste Zuführleitung und die zweiten Zuführleitungen und insbesondere die Verteilereinheit weisen eine spezifische Wärmeleitfähigkeit bei 0° C von höchstens 0,40 W/(mK), insbesondere von höchstens 0,30 W/(mK), und insbesondere von höchstens 0,20 W/(mK) auf.

Dadurch, dass die erste Zuführleitung ein inneres Rohr und ein dieses umgebendes äußeres Rohr aufweist und mindestens eines dieser Rohre in seiner Länge veränderbar ist, wird ein Ausgleich der unterschiedlichen Längenänderungen des inneren und des äußeren Rohrs ermöglicht. Wird die erste Zuführleitung von dem kryogenen Kühlmedium durchströmt, nimmt das innere Rohr im Wesentlichen dessen Temperatur an, wohingegen sich das äußere Rohr aufgrund des zwischen beiden Rohren angeordneten Isolationsmediums deutlich weniger abkühlt. Das innere Rohr ändert seine Länge dementsprechend deutlich mehr als das äußere Rohr. Um eine Beschädigung der ersten Zuführleitung zu vermeiden, ist mindestens eines der Rohre in seiner Länge veränderbar. Vorzugsweise weist das äußere Rohr einen mäanderförmigen Metallbalg zum thermischen Längenausgleich auf.

Eine Bearbeitungseinrichtung nach Anspruch 2 gewährleistet eine hohe thermische Isolation der ersten Zuführleitung, um eine unerwünschte Erwärmung des kryogenen Kühlmediums zu vermeiden. Vorzugsweise ist die erste Zuführleitung vollständig, also über die gesamte Länge, thermisch isolierend ausgebildet. Die Zuführleitung weist ein inneres Rohr und ein dieses umgebendes äußeres Rohr auf, die endseitig miteinander verbunden sind. Der von den Rohren begrenzte Isolationsraum ist evakuiert, wodurch die Zuführleitung eine äußerst geringe spezifische Wärmeleitfähigkeit aufweist.

Eine Bearbeitungseinrichtung nach Anspruch 3 ermöglicht auf einfache Weise ein Positionieren der ersten Zuführleitung in Richtung der Drehachse zum Werkzeugwechsel oder zum gezielten Verteilen des kryogenen Kühlmediums auf die zweiten Zuführleitungen. Zum Werkzeugwechsel wird die erste Zuführleitung linear verlagert und so von der Verteilereinheit und der bzw. den zweiten Zuführleitungen entkoppelt. Anschließend erfolgt in üblicher Weise der Wechsel des Werkzeuges. Nach dem Werkzeugwechsel wird die erste Zuführleitung in entgegengesetzter Richtung erneut linear verlagert und so wieder mit der Verteilereinheit und den zweiten Zuführleitungen gekoppelt. Vorzugsweise ist die Hubeinheit als pneumatisch oder hydraulisch betätigbare und doppelt wirkende Kolben-Zylinder-Einheit ausgebildet. Der Kolben dieser Kolben-Zylinder-Einheit ist beispielsweise mit der ersten Zuführleitung verbunden. Zusätzlich kann die erste Zuführleitung linear verlagert werden, um die Verteilung des kryogenen Kühlmediums auf die zweiten Zuführleitungen gezielt zu steuern und so den Austrittswinkel des kryogenen Kühlmediums einzustellen. Hierzu wird die erste Zuführleitung mittels der Hubeinheit in der Verteilereinheit gesteuert linear verlagert, wobei in Abhängigkeit der axialen Verschiebestellung der ersten Zuführleitung die Verteilung des kryogenen Kühlmediums auf die zweiten Zuführleitungen verändert wird. Auf diese Weise kann für die Bearbeitung der Kurbelwellenwangen ein großer Austrittswinkel des kryogenen Kühlmediums erzielt werden, wohingegen für die Bearbeitung der zylindrischen Lageroberflächen ein geringerer Austrittswinkel erzielt werden kann. Das gezielte Positionieren der ersten Zuführleitung kann beispielsweise mit der beschriebenen Kolben-Zylinder-Einheit erfolgen, bei der der Kolben jedoch nicht nur die Endstellungen anfahren kann, sondern auch beliebige Zwischenstellungen. Hierzu kann die Kolben-Zylinder-Einheit mit einem Längenmesssystem ausgestattet sein, das die Position des Kolbens bestimmt. Zur Einstellung der Position wird in Abhängigkeit der aktuellen Position der gewünschte Teil-Arbeitsraum über ein zugehöriges Ventil bzw. Servoventil mit dem Druckmedium befüllt, bis die gewünschte Position erreicht ist. Alternativ kann als Hubeinheit eine elektrische Antriebseinheit verwendet werden. Zum Verändern der Lage des Austrittswinkels des kryogenen Kühlmediums kann die erste Zuführleitung zusätzlich um die Drehachse verschwenkbar sein.

Eine Bearbeitungseinrichtung nach Anspruch 4 ermöglicht eine gezielte Zuführung des kryogenen Kühlmediums zu den in Eingriff mit der zu bearbeitenden Kurbelwelle befindlichen Schneideinsätzen, wenn die Eingriffsstelle des Werkzeuges bei der Bearbeitung wandert. Dies ist beispielsweise beim Außenfräsen von Hublagern bzw. der Kurbelwellenwangen der Fall. Die Antriebseinheit ist beispielsweise als NC-Achse ausgeführt. Durch einen elektronischen Zwanglauf mit der Drehbewegung der Kurbelwelle, der durch eine Steuereinrichtung realisiert wird, kann eine äußerst genaue Übereinstimmung der Lage bzw. der Bewegungen der Austrittsstelle des kryogenen Kühlmediums an den Schneideinsätzen und der Eingriffsstelle des Werkzeuges beim Bearbeiten der Kurbelwelle erreicht werden. Durch das Verschwenken der ersten Zuführleitung kann also die Lage des Austrittswinkel des kryogenen Kühlmediums verändert werden. Da das kryogene Kühlmedium exakt dort zugeführt wird, wo die Bearbeitung stattfindet, ist eine Erhöhung der Schnittgeschwindigkeit möglich.

Eine Bearbeitungseinrichtung nach Anspruch 5 gewährleistet einen einfachen Aufbau der Verteilereinheit und eine dementsprechend einfache Verteilung des kryogenen Kühlmediums von der ersten Zuführleitung auf die zweiten Zuführleitungen.

Eine Bearbeitungseinrichtung nach Anspruch 6 gewährleistet einen einfachen und kompakten Aufbau der Verteilereinheit und eine dementsprechend einfache Verteilung des kryogenen Kühlmediums von der ersten Zuführleitung auf die zweiten Zuführleitungen. Durch die umfangsseitig angeordnete Austrittsöffnung der ersten Zuführleitung ist diese in Abhängigkeit der Drehstellung des Werkzeuges nur mit denjenigen zweiten Zuführleitungen gekoppelt, deren zugehörige zweite Bohrungen im Bereich der Austrittsöffnung angeordnet sind. Vorzugsweise ist die Austrittsöffnung als Langloch ausgebildet, so dass axial versetzt zueinander angeordnete zweite Bohrungen gleichzeitig im Bereich der Austrittsöffnung liegen und so mehrere zweite Zuführleitungen gleichzeitig mit dem kryogenen Kühlmedium versorgt werden können.

Eine Bearbeitungseinrichtung nach Anspruch 7 ermöglicht auf einfache Weise das Verändern des Austrittswinkels des kryogenen Kühlmediums. Dadurch, dass sich über die Länge der Austrittsöffnung ihre Breite ändert, kann der Austrittswinkel des kryogenen Kühlmediums durch axiales Verschieben der ersten Zuführleitung in der Verteilereinheit verändert werden.

Tritt das kryogene Kühlmedium in einem Bereich der Austrittsöffnung mit großer Breite aus, so verteilt sich das kryogene Kühlmedium auf mehrere zweite Zuführleitungen, wodurch ein großer Austrittswinkel erzielt wird. Diese Verschiebestellung der ersten Zuführleitung eignet sich für die Bearbeitung der Kurbelwellenwangen. Tritt demgegenüber das kryogene Kühlmedium in einem Bereich der Austrittsöffnung mit geringerer Breite aus, so werden weniger zweite Zuführleitungen bzw. im Extremfall nur eine zweite Zuführleitung angesteuert, sodass das kryogene Kühlmedium in einem erheblich kleineren Austrittswinkel austritt. Diese Stellung der ersten Zuführleitung eignet sich für die Bearbeitung der zylindrischen Lageroberflächen. Vorzugsweise wird über eine Steuereinrichtung die axiale Verschiebestellung der ersten Zuführleitung mit der Drehung der Kurbelwelle gekoppelt, sodass sowohl für die Bearbeitung der Kurbelwellenwangen als auch für die Bearbeitung der zylindrischen Lageroberflächen automatisch der jeweils geeignete Austrittswinkel für das kryogene Kühlmedium eingestellt wird. Die Breite der Austrittsöffnung kann sich beispielsweise stufenförmig oder kontinuierlich ändern. Bei einer stufenförmigen Änderung werden diskrete Austrittswinkel eingestellt, wohingegen bei einer kontinuierlichen Änderung sich auch der Austrittswinkel kontinuierlich ändert bzw. in feineren Stufen einstellbar ist.

Eine Bearbeitungseinrichtung nach Anspruch 8 ermöglicht ein einfaches Einführen der ersten Zuführleitung in die erste Bohrung nach einem Werkzeugwechsel.

Eine Bearbeitungseinrichtung nach Anspruch 9 gewährleistet ein verlustfreies Zuführen des kryogenen Kühlmediums zu den Schneideinsätzen. Die Dichtungen weisen insbesondere eine hohe Beständigkeit gegenüber dem kryogenen Kühlmedium auf. Vorzugsweise sind die Dichtungen aus einem Kunststoffmaterial bzw. Gummimaterial, das eine hohe chemische Beständigkeit und gute thermische Isolationseigenschaften aufweist. Vorzugsweise sind die Dichtungen aus PTFE (Polytetrafluorethylen).

Eine Bearbeitungseinrichtung nach Anspruch 10 gewährleistet einen kompakten und robusten Aufbau der Verteilereinheit bzw. des Werkzeuges. Da die Verteilereinheit aus einem thermisch isolierenden Material besteht, das mechanisch deutlich weniger als Metall beansprucht werden kann, gewährleistet der metallische Anzugsbolzen, dass mechanische Belastungen nicht zu einem Bruch der Verteilereinheit führen.

Eine Bearbeitungseinrichtung nach Anspruch 11 verhindert eine unerwünschte Erwärmung des kryogenen Kühlmediums auf dem Weg zu den Schneideinsätzen. Das Kunststoffmaterial weist vorzugsweise eine spezifische Wärmeleitfähigkeit bei 0° C von höchstens 0,40 W/(mK), insbesondere von höchstens 0,30 W/(mK), und insbesondere von höchstens 0,20 W/(mK) auf. Vorzugsweise besteht die Verteilereinheit aus PTFE.

Eine Bearbeitungseinheit nach Anspruch 12 gewährleistet eine hohe thermische Isolation der zweiten Zuführleitungen, um eine unerwünschte Erwärmung des kryogenen Kühlmediums zu vermeiden. Vorzugsweise sind die zweiten Zuführleitungen vollständig, also über die gesamte Länge, thermisch isolierend ausgebildet. Die zweiten Zuführleitungen weisen jeweils ein inneres Rohr und ein dieses umgebendes äußeres Rohr auf, die endseitig miteinander verbunden sind. Der von den Rohren begrenzte Isolationsraum ist evakuiert, wodurch die zweiten Zuführleitungen eine äußerst geringe spezifische Wärmeleitfähigkeit aufweisen.

Eine Bearbeitungseinrichtung nach Anspruch 13 ermöglicht einen Ausgleich der unterschiedlichen Längenänderungen des inneren und des äußeren Rohrs. Werden die zweiten Zuführleitungen von dem kryogenen Kühlmedium durchströmt, nimmt jeweils das innere Rohr im Wesentlichen dessen Temperatur an, wohingegen sich das äußere Rohr aufgrund des zwischen beiden Rohren angeordneten Isolationsmediums deutlich weniger abkühlt. Das innere Rohr ändert seine Länge dementsprechend deutlich mehr als das äußere Rohr. Um eine Beschädigung der zweiten Zuführleitungen zu vermeiden, ist jeweils mindestens eines der Rohre in seiner Länge veränderbar. Vorzugsweise weist das äußere Rohr einen mäanderförmigen Metallbalg zum thermischen Längenausgleich auf.

Eine Bearbeitungseinrichtung nach Anspruch 14 gewährleistet eine gezielte Verteilung des kryogenen Kühlmediums auf mehreren in Eingriff mit der zu bearbeitenden Kurbelwelle befindliche Schneideinsätze.

Der Erfindung liegt ferner die Aufgabe zugrunde, ein Bearbeitungssystem zu schaffen, das eine höhere Produktivität und Wirtschaftlichkeit beim Bearbeiten von Kurbelwellen ermöglicht.

Diese Aufgabe wird durch ein Bearbeitungssystem mit den Merkmalen des Anspruchs 15 gelöst. Die Vorteile des erfindungsgemäßen Bearbeitungssystems entsprechen den bereits beschriebenen Vorteilen der erfindungsgemäßen Bearbeitungseinrichtung. Aus dem thermisch isolierten Speicher wird das kryogene Kühlmedium über die thermisch isolierte Versorgungsleitung der Bearbeitungseinrichtung zugeführt. Um die Temperatur des gespeicherten kryogenen Kühlmediums konstant zu halten, ist ein Kühlaggregat vorgesehen. Weiterhin weist das Bearbeitungssystem eine Förderpumpe auf, um das kryogene Kühlmedium aus dem Speicher zu der Bearbeitungseinrichtung zu fördern. Für den Werkzeugwechsel weist das Bearbeitungssystem zusätzlich ein Ventil bzw. Absperrventil auf, das die Zufuhr des kryogenen Kühlmediums zu der Bearbeitungseinrichtung vor einem Werkzeugwechsel unterbricht. Das Kühlaggregat und/oder die Förderpumpe und/oder das Ventil sind mittels einer Steuereinrichtung ansteuerbar. Das Bearbeitungssystem ist Teil einer ansonsten üblichen Werkzeugmaschine zum Bearbeiten von Kurbelwellen.

Ein Bearbeitungssystem nach Anspruch 16 ermöglicht eine Einstellung der Kühlwirkung über die Einstellung der Zuflussmenge. Hierzu ist das Ventil beispielsweise als Servoventil ausgebildet. Die Breite der Austrittsöffnung der ersten Zuführleitung und damit der Austrittswinkel wird entsprechend der größten Schnittbogenlänge dimensioniert. Bei der Bearbeitung von kleineren Schnittbogenlängen wird die Zuflussmenge des kryogenen Kühlmediums über das Ventil entsprechend reduziert. Die Kühlwirkung kann somit auf einfache und kostengünstige Weise eingestellt werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung eines Bearbeitungssystems zum Bearbeiten von Kurbelwellen gemäß einem ersten Ausführungsbeispiel,
- Fig. 2: einen Axialschnitt durch eine Bearbeitungseinrichtung des Bearbeitungssystems in Fig. 1 in einer Betriebsstellung zum Zuführen eines kryogenen Kühlmediums,
- Fig. 3: eine vergrößerte Darstellung der Bearbeitungseinrichtung in Fig. 2 im Bereich einer Hubeinheit zum Verlagern einer ersten Zuführleitung für das kryogene Kühlmedium,
- Fig. 4: eine vergrößerte Darstellung der Bearbeitungseinrichtung in Fig. 2 im Bereich einer Verteilereinheit zum Verteilen des kryogenen Kühlmediums von der ersten Zuführleitung auf mehrere zweite Zuführleitungen,
- Fig. 5: eine schematische Frontalansicht auf ein Werkzeug der Bearbeitungseinrichtung in Fig. 2,
- Fig. 6: eine vergrößerte Darstellung des Werkzeuges in Fig. 5 im Bereich der Schneideinsätze,
- Fig. 7: einen Axialschnitt durch die Bearbeitungseinrichtung in einer Werkzeugwechselstellung,
- Fig. 8: eine vergrößerte Darstellung der Verteilereinheit in Fig. 7,
- Fig. 9: einen Axialschnitt durch eine Bearbeitungseinrichtung gemäß einem zweiten Ausführungsbeispiel mit einer Antriebseinheit zum Verschwenken der ersten Zuführleitung,
- Fig. 10: einen Axialschnitt durch eine in einer ersten Betriebsstellung befindliche Bearbeitungseinrichtung gemäß einem dritten Ausführungsbeispiel im Bereich der Verteilereinheit,
- Fig. 11: einen Axialschnitt durch die Bearbeitungseinrichtung in Fig. 10 entlang der Schnittebene XI-XI,
- Fig. 12: einen Axialschnitt durch die in einer zweiten Betriebsstellung befindlichen Bearbeitungseinrichtung im Bereich der Verteilereinheit, und
- Fig. 13: einen Axialschnitt durch die Bearbeitungseinrichtung in Fig. 12 entlang der Schnittebene XIII-XIII.

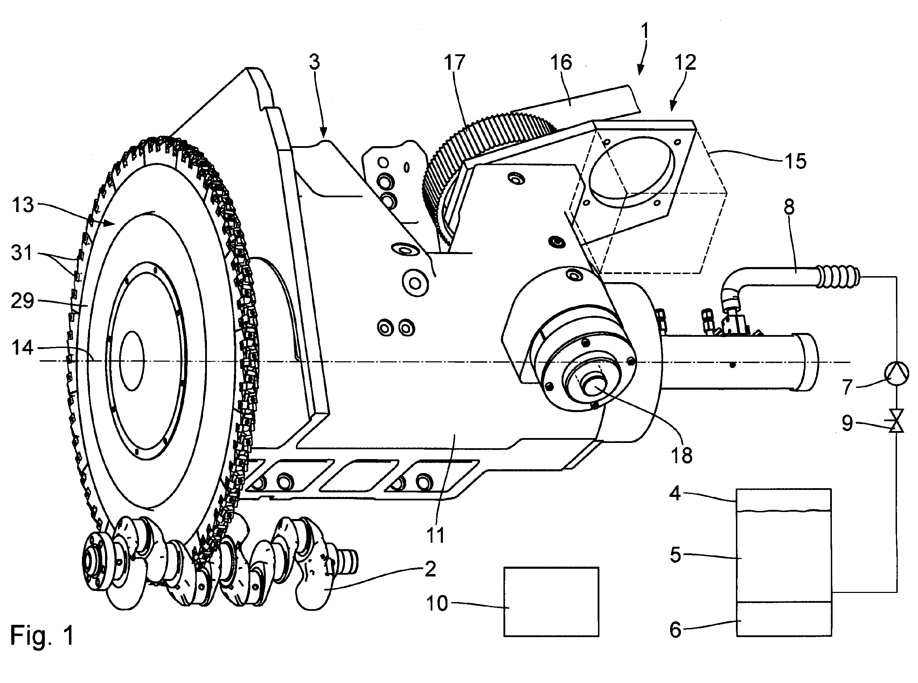

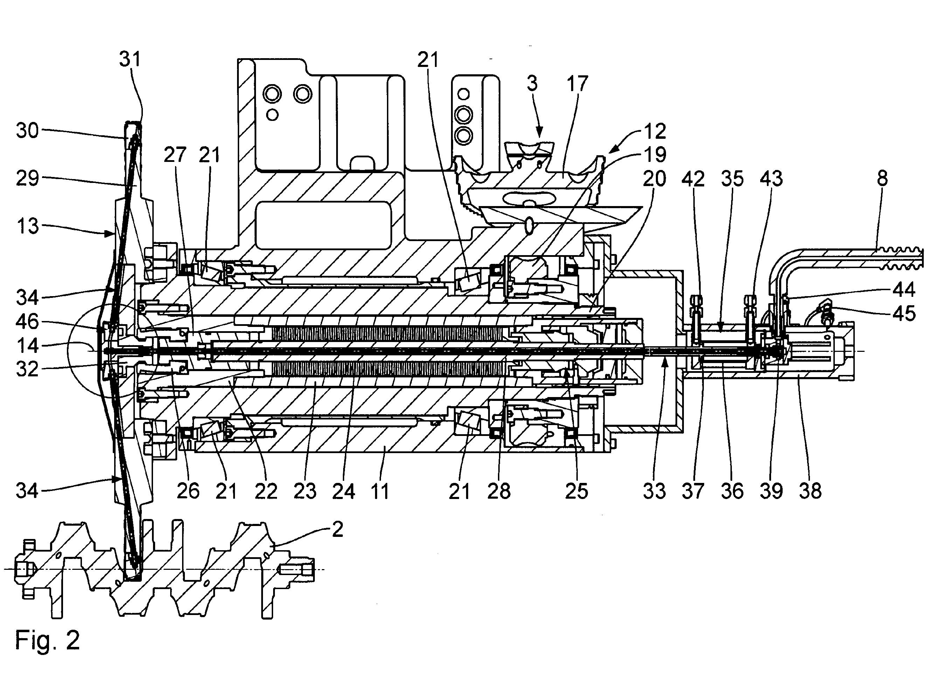

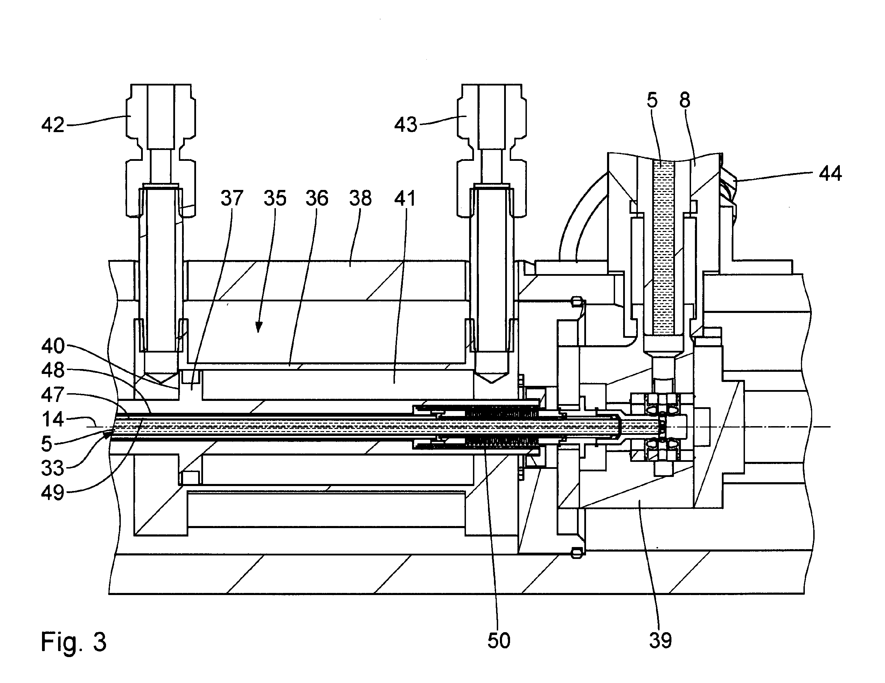

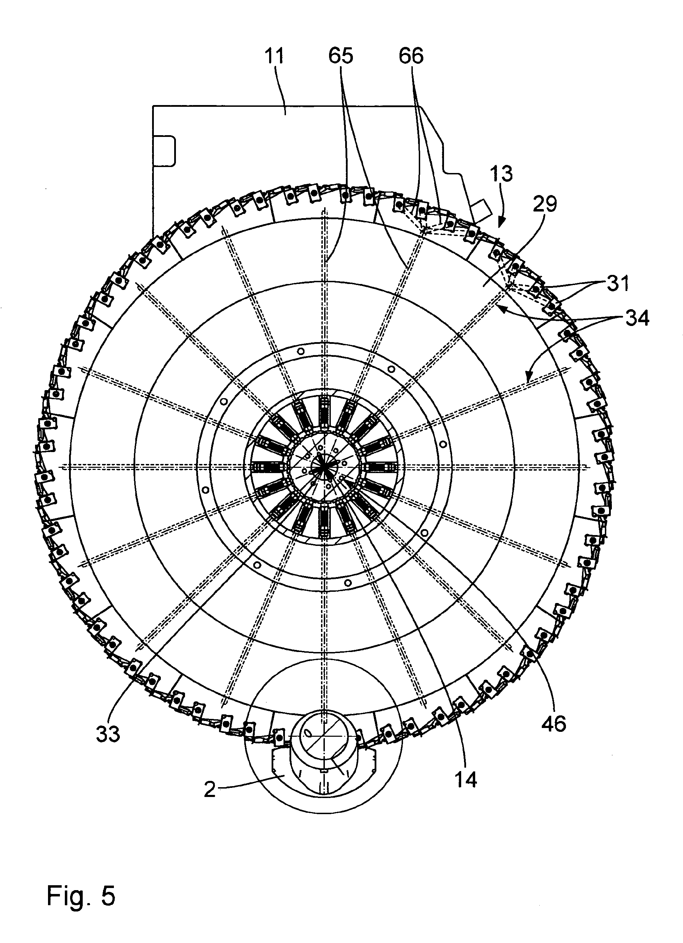

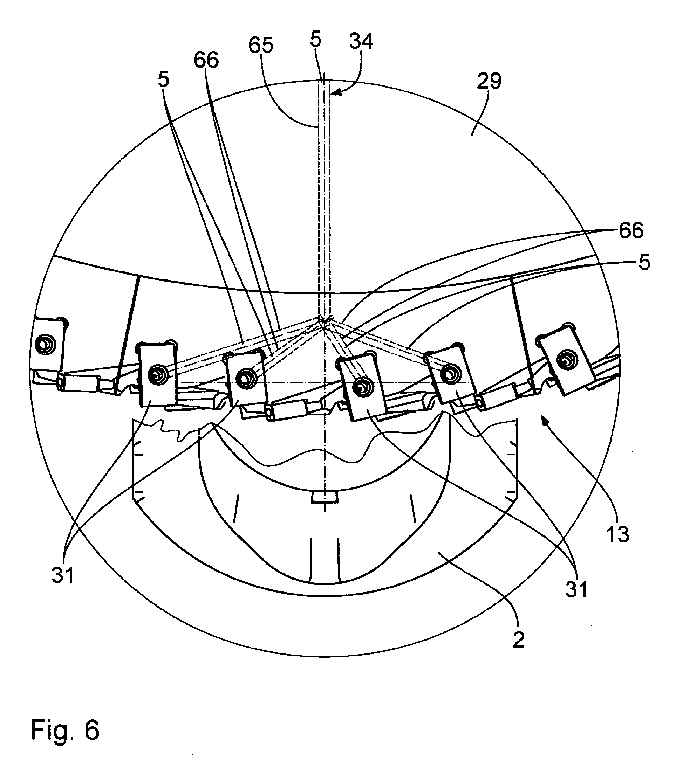

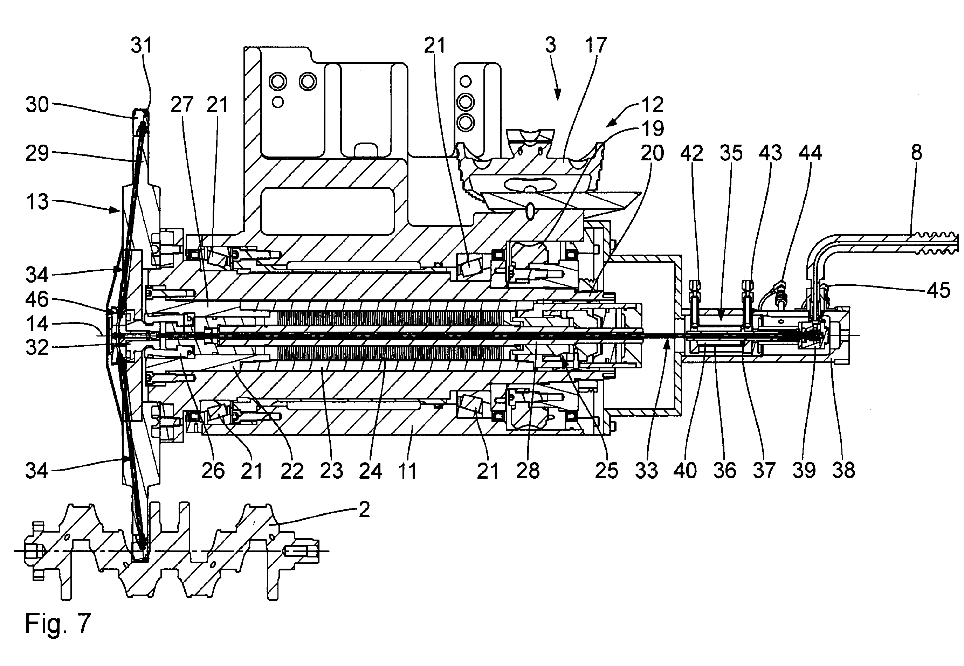

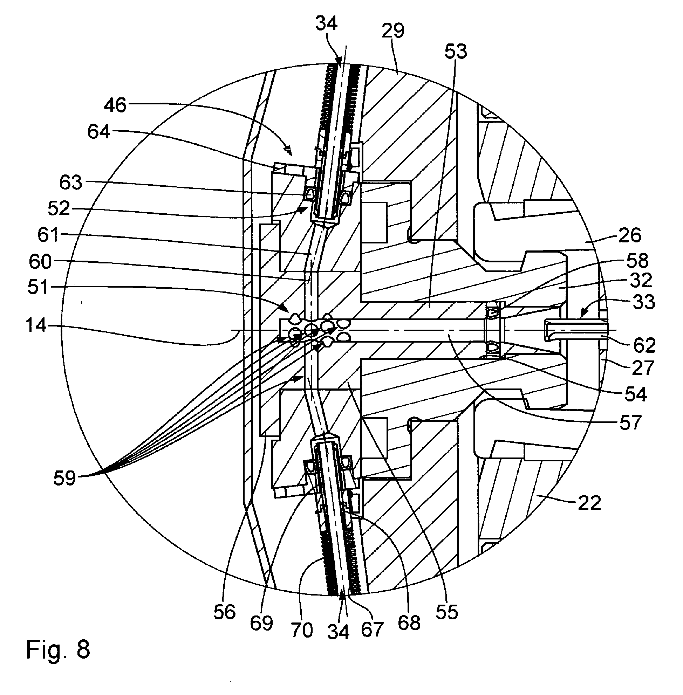

Nachfolgend ist unter Bezugnahme auf die Fig. 1 bis 8 ein erstes Ausführungsbeispiel der Erfindung beschrieben. Eine nicht näher dargestellte Werkzeugmaschine weist ein Bearbeitungssystem 1 zur Bearbeitung von Kurbelwellen 2 auf, das eine Bearbeitungseinrichtung 3, einen thermisch isolierten Speicher 4 zum Bereitstellen eines kryogenen Kühlmediums 5, ein Kühlaggregat 6 zum Kühlen des kryogenen Kühlmediums 5, eine Förderpumpe 7, eine Versorgungsleitung 8 mit einem zugehörigen Absperrventil bzw. Servoventil 9 und eine Steuereinrichtung 10 umfasst. Die Versorgungsleitung 8 ist mit dem Speicher 4 und der Bearbeitungseinrichtung 3 verbunden und thermisch isoliert. Die Bearbeitungseinrichtung 3, das Kühlaggregat 6, die Förderpumpe 7 und das Absperrventil 9 sind mittels der Steuereinrichtung 10 ansteuerbar. Der über das Bearbeitungssystem 1 hinausgehende Aufbau der Werkzeugmaschine ist üblich und bekannt.

Die Bearbeitungseinrichtung 3 weist ein Gehäuse 11 auf, an dem eine erste Antriebseinheit 12 zum Drehantreiben eines Werkzeuges 13 um eine Drehachse 14 angeordnet ist. Die Antriebseinheit 12 umfasst einen elektrischen Antriebsmotor 15, der außen an dem Gehäuse 11 befestigt ist und über einen Zahnriemen 16 ein Zahnrad 17 mit einer daran angeordneten Schneckenwelle 18 drehantreibt. Die Schneckenwelle 18 ist mit einem konzentrisch zu der Drehachse 14 angeordneten Schneckenrad 19 gekoppelt, das an einer Drehhülse 20 befestigt ist. Die Drehhülse 20 ist mittels Lagern 21 um die Dreheachse 14 drehbar an dem Gehäuse 11 gelagert. In der Drehhülse 20 sind zwei Hülsenteile 22, 23, eine Vielzahl von Federelementen 24 und eine erste Kolben-Zylinder-Einheit 25 angeordnet. Die Federelemente 24 sind als Tellerfedern ausgebildet. Das erste Hülsenteil 22 ist an einem dem Werkzeug 13 zugewandten Ende der Drehhülse 20 befestigt. Das zweite Hülsenteil 23 liegt gegen das erste Hülsenteil 22 an und erstreckt sich im Inneren der Drehhülse 20 bis annähernd zu dem gegenüberliegenden Ende. Die Kolben-Zylinder-Einheit 25 liegt wiederum gegen das zweite Hülsenteil 23 an und ist an der Drehhülse 20 befestigt. Die Federelemente 24 sind im Inneren des zweiten Hülsenteils 23 angeordnet und liegen an der einen Seite gegen das Hülsenteil 22 und an der anderen Seite gegen die Kolben-Zylinder-Einheit 25 an. Die Kolben-Zylinder-Einheit 25 ist in üblicher Weise mittels einer nicht näher dargestellten Förderpumpe hydraulisch betätigbar.

Im Inneren des ersten Hülsenteils 22 ist eine Spannzange 26 zum Einspannen des Werkzeuges 13 angeordnet. Die Spannzange 26 ist mittels einer Betätigungshülse 27 betätigbar, die in dem ersten Hülsenteil 22 axial verschiebbar gelagert ist. Die Betätigungshülse 27 ist an einer Betätigungsstange 28 befestigt, die sich konzentrisch zur Drehachse 14 durch die Federelemente 24 bis zu der Kolben-Zylinder-Einheit 25 erstreckt, an der sie ebenfalls befestigt ist. Die Spannzange 26 ist in üblicher Weise mittels der Federelemente 24 gespannt und durch Betätigen der Kolben-Zylinder-Einheit 25 und axiales Verschieben der Betätigungsstange 28 gegen die Vorspannkraft der Federelemente 24 lösbar.

Das Werkzeug 13 dient zum Bearbeiten der Hub- und Mittellager der Kurbelwelle 2. Es weist einen scheibenförmigen Grundkörper 29 auf, an dem umfangsseitig in gleichen Winkelabständen Kassetten 30 mit darin angeordneten Schneideinsätzen 31 befestigt sind. Zum Einspannen des Werkzeuges 13 ist an dem Grundkörper 29 ein Anzugsbolzen 32 konzentrisch zu der Drehachse 14 angeordnet. Der Anzugsbolzen 32 besteht aus einem metallischen Material und ist endseitig derart geformt, dass dieser mittels der Spannzange 26 einspannbar und das Werkzeug 13 so an der Drehhülse 20 befestigbar ist.

Zum Zuführen des kryogenen Kühlmediums 5 von der Versorgungsleitung 8 zu den Schneideinsätzen 31 weist die Bearbeitungseinrichtung 3 eine erste Zuführleitung 33 und eine Vielzahl von zweiten Zuführleitungen 34 auf, die thermisch isolierend ausgebildet sind. Die erste Zuführleitung 33 ist konzentrisch zu der Drehachse 14 angeordnet und mittels einer Hubeinheit 35 parallel zu der Drehachse 14 verlagerbar. Hierzu ist die Hubeinheit 35 als doppelt wirkende Kolben-Zylinder-Einheit mit einem Zylinder 36 und einem darin geführten Kolben 37 ausgebildet. Die erste Zuführleitung 33 wird auch als Lanze bezeichnet.

Die Kolben-Zylinder-Einheit 35 ist in einem Anschlussgehäuse 38 angeordnet, das an dem Gehäuse 11 befestigt ist. Die Versorgungsleitung 8 ist in das Anschlussgehäuse 38 geführt und mittels einer Anschlusseinheit 39 mit der ersten Zuführleitung 33 verbunden. Zum Verlagern der ersten Zuführleitung 33 ist diese durch den Kolben 37 geführt und mit diesem verbunden. Der Kolben 37 teilt den Arbeitsraum der Kolben-Zylinder-Einheit 35 in zwei Teil-Arbeitsräume 40, 41, die zum Zuführen eines Druckmediums jeweils mit einem Anschluss 42, 43 in Verbindung sind. Auf diese Weise sind beide Teil-Arbeitsräume 40, 41 mit dem Druckmedium befüllbar und somit der Kolben 37 in beiden Richtungen axial verlagerbar. An dem Anschlussgehäuse 38 sind ferner zwei Induktionsschalter 44, 45 angeordnet, mittels denen die Stellung der Kolben-Zylinder-Einheit 35 detektierbar ist. Die Kolben-Zylinder-Einheit 35 ist beispielsweise pneumatisch oder hydraulisch betätigbar.

Die erste Zuführleitung 33 ist ausgehend von der Anschlusseinheit 39 konzentrisch zu der Drehachse 14 durch den Kolben 37, die Betätigungsstange 28, die Betätigungshülse 27 und den Anzugsbolzen 32 bis zu einer Verteilereinheit 46 geführt. Zur Vermeidung einer unerwünschten Erwärmung des kryogenen Kühlmediums 5 in der ersten Zuführleitung 33 ist diese vakuumisoliert ausgebildet. Hierzu weist die Zuführleitung 33 ein inneres Rohr 47 und ein dieses umgebendes äußeres Rohr 48 auf, die endseitig miteinander verbunden sind und zwischen sich einen Isolationsraum 49 begrenzen. Der Isolationsraum 49 ist evakuiert, so dass die Zuführleitung 33 eine äußerst niedrige spezifische Wärmeleitfähigkeit aufweist. In das äußere Rohr 48 ist ein mäanderförmig ausgebildeter Metallbalg 50 integriert, so dass das äußere Rohr 48 in seiner Länge veränderbar ist. Der Metallbalg 50 dient zum Ausgleich unterschiedlicher Längenänderungen der Rohre 47, 48 infolge des kryogenen Kühlmediums 5.

Die Verteilereinheit 46 ist konzentrisch zu der Drehachse 14 an dem Grundkörper 29 angeordnet und umfasst zwei Verteilerteile 51, 52. Das erste Verteilerteil 51 ist als dreistufiger Zylinder ausgebildet und erstreckt sich mit einem ersten Abschnitt 53 in eine Durchgangsbohrung 54 des Anzugsbolzens 32. Ein sich an den ersten Abschnitt 53 anschließender zweiter Abschnitt 55 liegt seitlich gegen den Anzugsbolzen 32 an. Der zweite Abschnitt 55 ist von dem ringförmig ausgebildeten zweiten Verteilerteil 52 umgeben, das ebenfalls gegen den Anzugsbolzen 32 anliegt und mittels eines dritten Abschnitts 56, der sich an den zweiten Abschnitt 55 anschließt, in axialer Richtung gesichert. In dem ersten Verteilerteil 51 ist eine erste Bohrung 57 ausgebildet, die sich sacklochartig in den ersten und zweiten Abschnitt 53, 55 erstreckt. Die erste Bohrung 57 ist an dem offenen Ende trichterförmig ausgebildet, um das Einführen der ersten Zuführleitung 33 zu erleichtern. In die Bohrung 57 erstreckt sich nach dem trichterförmigen Abschnitt eine ringförmige Dichtung 58, die zum Abdichten des Zwischenraums zwischen dem ersten Abschnitt 53 und der eingeführten Zuführleitung 33 dient. Die Verteilereinheit 46 wird auch als Drehverteiler bezeichnet.

Die Verteilereinheit 46 weist weiterhin eine Vielzahl von zweiten Bohrungen 59 auf, die zum Einführen der zweiten Zuführleitungen 34 dienen. Die zweiten Bohrungen 59 erstrecken sich quer bzw. radial zu der Drehachse 14, wobei ein erster Bohrungsabschnitt 60 in dem zweiten Abschnitt 55 des Verteilerteils 51 und ein zweiter Bohrungsabschnitt 61 in dem Verteilerteil 52 ausgebildet ist. Die zweiten Bohrungen 29 erstrecken sich ausgehend von der Umfangsfläche des Verteilerteils 52 bis zu der ersten Bohrung 57 und münden radial und axial versetzt in diese. Zum Zuführen des kryogenen Kühlmediums 5 zu mehreren axialen versetzt angeordneten Bohrungen 59 und der damit verbundenen zweiten Zuführleitungen 34 weist die erste Zuführleitung 33 an ihrem dem Werkzeug 13 zugewandten Ende umfangsseitig eine Austrittsöffnung 62 auf, die in Form eines Langloches ausgebildet ist. Die Austrittsöffnung 62 ist zu der Eingriffsstelle des Werkzeuges 13 mit der Kurbelwelle 2 gerichtet.

In die zweiten Bohrungsabschnitte 61 sind die zweiten Zuführleitungen 34 eingeführt. Die zweiten Bohrungsabschnitte 61 sind stufenförmig ausgebildet um einen Anschlag für die jeweilige zweite Zuführleitung 34 und eine zugehörige ringförmige Dichtung 63 zu bilden. Die Dichtungen 63 sind mittels zugehöriger Sicherungselemente 64 gesichert. Die Dichtungen 63 dienen zum Abdichten der Zwischenräume zwischen den zweiten Bohrungsabschnitten 61 und den darin eingeführten Zuführleitungen 34. Die Verteilereinheit 46 koppelt somit die erste Zuführleitung 33 in Abhängigkeit der Drehstellung des Werkzeuges 13 mit mindestens einer der zweiten Zuführleitungen 34. Die Verteilereinheit 46, also die Verteilerteile 51, 52 sind aus einem thermisch isolierenden Kunststoffmaterial ausgebildet. Das Kunststoffmaterial ist beispielsweise PTFE. Die Dichtungen 58, 63 sind aus einem chemisch beständigen und thermisch isolierenden Material ausgebildet. Als Material dient beispielsweise PTFE.

Die zweiten Zuführleitungen 34 verlaufen quer bzw. radial zu der Drehachse 14 zu den Schneideinsätzen 31 und ermöglichen so das Zuführen des kryogenen Kühlmediums 5 von der ersten Zuführleitung 33 über die Verteilereinheit 46 zu den jeweils in Eingriff mit der Kurbelwelle 2 befindlichen Schneideinsätzen 31. Die zweiten Zuführleitungen 34 weisen jeweils einen ersten Leitungsabschnitt 65 und mehrere damit verbundene zweite Leitungsabschnitte 66 auf. Die ersten Leitungsabschnitte 65 verlaufen in äquidistanten Winkelabschnitten quer bzw. radial zu der Drehachse 14 von den zugehörigen zweiten Bohrungen 59 bis mittig vor vier zugehörige Schneideinsätze 31. Zu jedem ersten Leistungsabschnitt 65 gehören vier zweite Leitungsabschnitte 66, die von dem Ende des ersten Leitungsabschnitts 65 zu den Schneideinsätzen 31 verlaufen.

Die ersten Leitungsabschnitte 65 der zweiten Zuführleitungen 34 sind vakuumisoliert ausgebildet. Entsprechend der ersten Zuführleitung 33 weisen die zweiten Zuführleitungen 34 hierzu jeweils ein inneres Rohr 67 und ein dieses umgebendes äußeres Rohr 68 auf, die endseitig miteinander verbunden sind und zwischen sich einen Isolationsraum 69 begrenzen. Der Isolationsraum 69 ist evakuiert, wodurch die zweiten Zuführleitungen 34 im ersten Leitungsabschnitt 65 eine äußerst geringe spezifische Wärmeleitfähigkeit aufweisen. Zum Längenausgleich zwischen dem inneren Rohr 67 und dem äußeren Rohr 68 ist in das jeweilige äußere Rohr 68 ein mäanderförmig ausgebildeter Metallbalg 70 integriert. Hierdurch ist das jeweilige äußere Rohr 68 in seiner Länge veränderbar.

Die zweiten Leitungsabschnitte 66 sind nicht thermisch isolierend ausgebildet. Alternativ können auch die zweiten Leitungsabschnitte 66 thermisch isolierend und insbesondere vakuumisoliert ausgebildet sein. Beispielsweise können die zweiten Leitungsabschnitte 66 durch Röhrchen gebildet werden, die aus einem thermisch isolierenden Material bestehen und in entsprechende Bohrungen eingeführt sind. Als thermisch isolierendes Material kann beispielsweise PTFE dienen. Durch eine vakuumisolierte Ausbildung der zweiten Leitungsabschnitte 66 wird die thermische Isolation nochmals verbessert. Hinsichtlich der Details der vakuumisolierten Ausbildung wird auf die ersten Leitungsabschnitte 65 verwiesen.

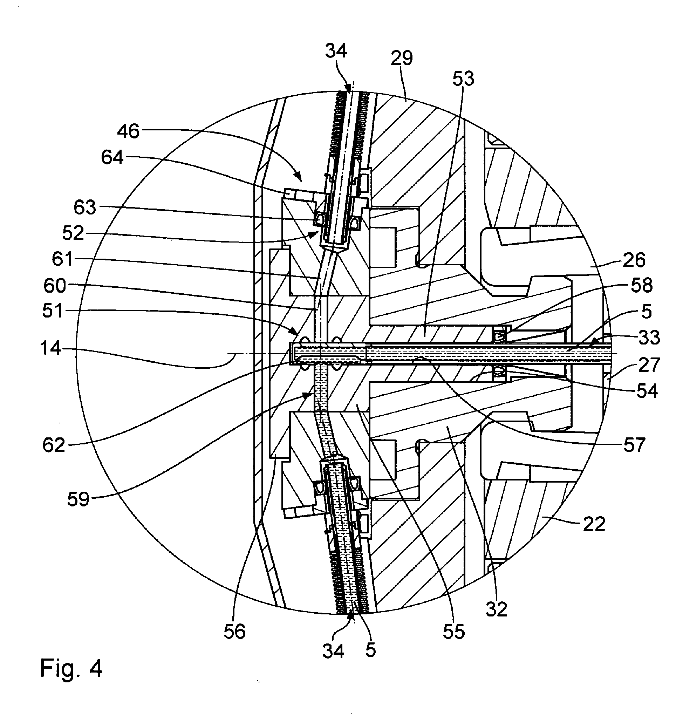

Nachfolgend ist die Bearbeitung einer Kurbelwelle 2 beschrieben. Die erste Zuführleitung 33 ist für die Bearbeitung mittels der Kolben-ZylinderEinheit 35 derart in die erste Bohrung 57 eingeführt, dass die Austrittsöffnung 62 im zweiten Abschnitt 55, also dort wo die zweiten Bohrungen 59 in die erste Bohrung 57 münden, zu liegen kommt. Die in die Verteilereinheit 46 eingeführte erste Zuführleitung 33 ist in Fig. 4 gezeigt. Anschließend wird das Werkzeug 13 mittels der Antriebseinheit 12 um die Drehachse 14 drehangetrieben und das kryogene Kühlmedium 5 zugeführt. Das kryogene Kühlmedium 5 ist beispielsweise flüssiger Stickstoff, der unterhalb seiner Verdampfungstemperatur in dem Speicher 4 bereitgestellt wird und mittels des Kühlaggregats 6 auf der gewünschten Temperatur gehalten wird. Zum Zuführen des kryogenen Kühlmediums 5 ist das Absperrventil 9 geöffnet, so dass die Förderpumpe 7 das kryogene Kühlmedium 5 von dem Speicher 4 über die Versorgungsleitung 8 zu der Bearbeitungseinrichtung 3 fördern kann.

Beim Drehantreiben des Werkzeuges 13 steht die Kolben-Zylinder-Einheit 35 und die erste Zuführleitung 33 um die Drehachse 14 fest, wohingegen die Drehhülse 20, die Hülsenteile 22, 23, die Federelemente 24, die Kolben-Zylinder-Einheit 25, die Betätigungshülse 27, die Betätigungsstange 28 und die Spannzange 26 mit dem darin eingespannten Werkzeug 13 um die Drehachse 14 rotieren. Das kryogene Kühlmedium 5 strömt durch die erste Zuführleitung 33 zu der Verteilereinheit 46 und wird dort in Abhängigkeit der Drehstellung des Werkzeuges 13 auf diejenigen zweiten Zuführleitungen 34 verteilt, deren zugehörige zweite Bohrungen 59 im Bereich der Austrittsöffnung 62 der ersten Zuführleitung 33 liegen. Das kryogene Kühlmedium 5 strömt somit durch die zweiten Zuführleitungen 34 bis zu den gerade in Eingriff mit der Kurbelwelle 2 befindlichen Schneideinsätzen 31 und kühlt äußerst effektiv die zugehörigen Schneiden. In den Kassetten 30 wird das kryogene Kühlmedium 5 durch einzelne Kanäle zu den Schneideinsätzen 31 bzw. den Schneidplatten geführt. Da die Zuführleitungen 33, 34 vakuumisoliert ausgebildet sind und auch die Verteilereinheit 46 aus einem thermisch isolierenden Kunststoffmaterial besteht, erwärmt sich das kryogene Kühlmedium 5 beim Durchströmen der Bearbeitungseinrichtung 3 im Wesentlichen nicht. Das kryogene Kühlmedium 5 tritt an den Schneideinsätzen 31 mit einer Temperatur von weniger als - 180° C aus. Nach dem Austreten verdampft das kryogene Kühlmedium 5, so dass die Bearbeitung der Kurbelwelle 2 trocken erfolgt und die Kurbelwelle 2 sowie die gesamte Werkzeugmaschine nicht verunreinigt wird.

Zum Werkzeugwechsel wird die Drehung des Werkzeuges 13 angehalten und die Zufuhr des kryogenen Kühlmediums 5 durch Abschalten der Förderpumpe 7 und Absperren des Absperrventils 9 unterbrochen. Anschließend wird die erste Zuführleitung 33 zusammen mit der Anschlusseinheit 39 und der damit verbundenen Versorgungsleitung 8 mittels der Kolben-Zylinder-Einheit 35 verlagert, so dass die erste Zuführleitung 33 aus der ersten Bohrung 57 entfernt wird. Nach dem Lösen der Spannzange 26, das in üblicher Weise mittels der Kolben-Zylinder-Einheit 25, der Betätigungsstange 28 und der Betätigungshülse 27 erfolgt, kann das Werkzeug 13 gegen ein neues Werkzeug 13 ersetzt werden. Nachdem das neue Werkzeug 13 mittels der Spannzange 26 durch die Kraft der Federelemente 24 gespannt wurde, erfolgt ein erneutes Verlagern der ersten Zuführleitung 33. Diese wird mittels der Kolben-Zylinder-Einheit 35 wieder in die erste Bohrung 57 eingeführt, wobei das Einführen durch den trichterförmigen Endabschnitt der Bohrung 57 erleichtert wird. Anschließend kann das Werkzeug 13 wieder drehangetrieben und das kryogene Kühlmedium 5 wieder zugeführt werden.

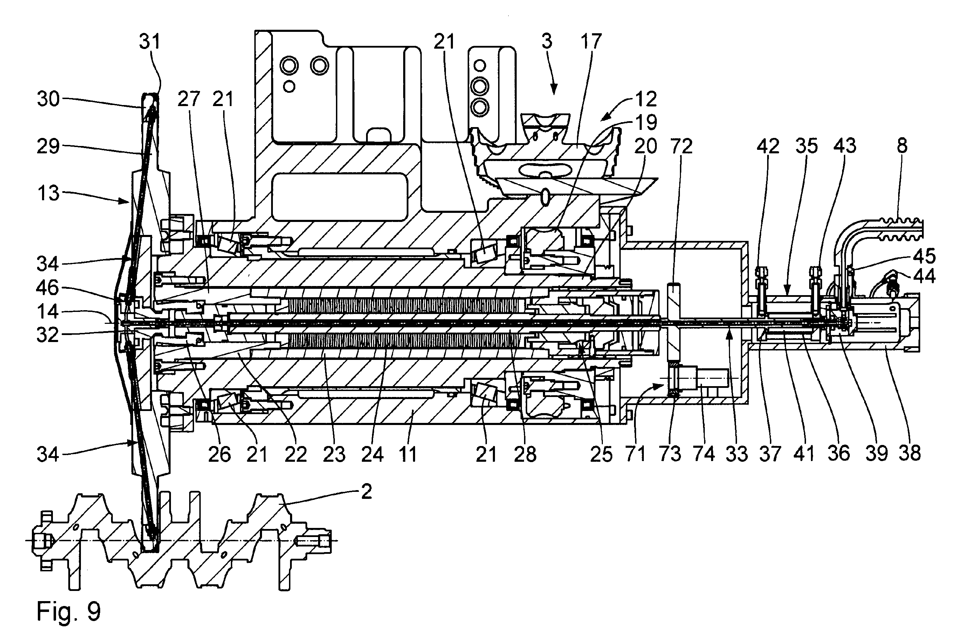

Nachfolgend ist unter Bezugnahme auf Fig. 9 ein zweites Ausführungsbeispiel der Erfindung beschrieben. An dem Anschlussgehäuse 38 ist zusätzlich eine zweite Antriebseinheit 71 angeordnet, mittels der die erste Zuführleitung 33 um die Drehachse 14 verschwenkbar ist. Hierzu ist die erste Zuführleitung 33 mit einem ersten Zahnrad 72 verbunden, das über ein zweites Zahnrad 73 von einem elektrischen Antriebsmotor 74 drehantreibbar ist. Die Antriebsmotoren 5 und 74 sind mittels der Steuereinrichtung 10 ansteuerbar, so dass die Drehstellung des Werkzeuges 13 mit der Schwenkstellung der ersten Zuführleitung 33 koordiniert bzw. synchronisiert ist. In Fig. 9 ist das Anschlussgehäuse 38 und die darin angeordnete Kolben-Zylinder-Einheit 35 um die Drehachse 14 feststehend. Alternativ kann das Anschlussgehäuse 38 und die Kolben-Zylinder-Einheit 35 zusammen mit der ersten Zuführleitung 33 um die Drehachse 14 verschwenkt werden. Durch die periodische Schwenkbewegung der ersten Zuführleitung 33 wandert die Austrittsstelle des kryogenen Kühlmediums 5 an den Schneideinsätzen 31 entsprechend der bei der Bearbeitung der Kurbelwelle 2 wandernden Eingriffsstelle hin und her. Dies ist beispielsweise beim Bearbeiten der Hublager der Kurbelwelle 2 vorteilhaft. Da die Antriebseinheit 72 als NC-Achse ausgeführt ist, kann aufgrund des elektronischen Zwanglaufs mit der Drehbewegung des Werkzeuges 13 bzw. der Kurbelwelle 2 eine äußerst genaue Übereinstimmung der Lage bzw. der Bewegung der Austrittsstelle des kryogenen Kühlmediums 5 mit der Eingriffsstelle der Schneideinsätze 31 bzw. der Schneidplatten erzielt werden. Hinsichtlich des weiteren Aufbaus sowie der weiteren Funktionsweise des Bearbeitungssystems 1 wird auf das erste Ausführungsbeispiel verwiesen.

Durch das erfindungsgemäße Bearbeitungssystem 1 bzw. die erfindungsgemäße Bearbeitungseinrichtung 3 können die Schnittparameter bei der Bearbeitung von Kurbelwellen 2 gesteigert werden, da das kryogene Kühlmedium 5 direkt zur Eingriffsstelle des Werkzeuges 13 geführt wird. Hierdurch wird eine Verbesserung der Produktivität und Wirtschaftlichkeit bei der Bearbeitung von Kurbelwellen 2 erzielt.

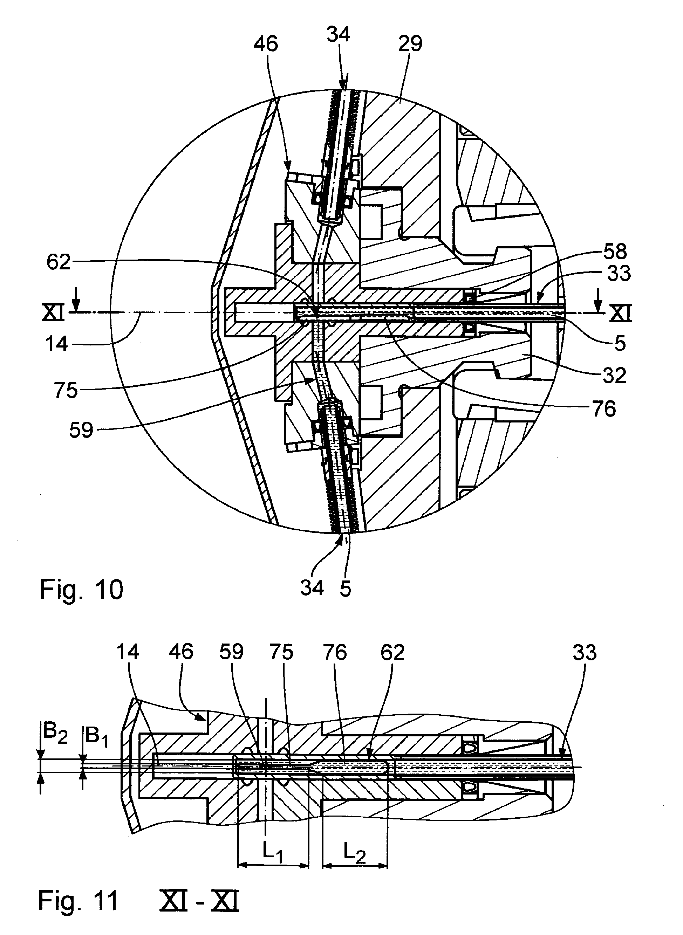

Nachfolgend ist unter Bezugnahme auf die Fig. 10 bis 13 ein drittes Ausführungsbeispiel der Erfindung beschrieben. Bei der Bearbeitungseinrichtung 3 ist der Austrittswinkel des kryogenen Kühlmediums 5 in Abhängigkeit der axialen Verschiebestellung der ersten Zuführleitung 33 in der Verteilereinheit 46 veränderbar. Dies ist insbesondere beim lateralen Fräsen der Kurbelwellenwangen vorteilhaft. Beim lateralen Fräsen der Kurbelwellenwangen schwankt die Schnittbogenlänge innerhalb einer Kurbelwellenumdrehung stark. Typischerweise nimmt die Schnittbogenlänge Werte von 0 bis 180 mm an. Der Schnittbogen ändert sich also stark bezüglich seiner Länge und seiner Lage. Zur Vermeidung von Einschränkungen bezüglich der Schnittgeschwindigkeit und von Standzeitproblemen müssen die in Eingriff befindlichen Schneiden vorteilhafterweise während der gesamten Eingriffszeit gekühlt werden. Hierzu muss mittels des erfindungsgemäßen Bearbeitungssystems 1 bzw. der erfindungsgemäßen Bearbeitungseinrichtung 3 die Winkellage der gekühlten Schneiden und die von den gekühlten Schneiden abgedeckte Kreisbogenlänge bzw. der Austrittswinkel des kryogenen Kühlmediums 5 entsprechend der Lage und/oder Länge des Schnittbogens steuerbar sein.

Zum Verändern des Austrittswinkels des kryogenen Kühlmediums 5 ist die Austrittsöffnung 62 der ersten Zuführleitung 33 als Langloch ausgebildet, dessen Breite sich über die Länge verändert. Die Austrittsöffnung 62 weist einen ersten Öffnungsabschnitt 75 auf, der entlang der Drehachse 14 eine zugehörige Länge L₁ und quer zu der Drehachse 14 eine zugehörige Breite B₁ hat. Der erste Öffnungsabschnitt 75 geht in einen zweiten Öffnungsabschnitt 76 über, der eine zugehörige Länge L₂ und eine zugehörige Breite B₂ aufweist. Die Länge L₂ ist ungefähr gleich der Länge L₁, wohingegen die Breite B₂ größer als die Breite B₁ ist. Die erste Zuführleitung 33 ist mittels der Hubeinheit 35 definiert axial verlagerbar, sodass - je nach axialer Verschiebestellung der ersten Zuführleitung 33 - entweder der erste Öffnungsabschnitt 75 oder der zweite Öffnungsabschnitt 76 im Bereich der zweiten Bohrungen 59 liegt.

Die Fig. 10 und 11 zeigen eine erste Betriebsstellung der Bearbeitungseinrichtung 3, bei der die erste Zuführleitung 33 sich in einer ersten Verschiebestellung befindet, in der der erste Öffnungsabschnitt 75 im Bereich der zweiten Bohrungen 59 liegt. Durch die geringe Breite B₁ des ersten Öffnungsabschnitts 75 liegen nur wenige zweite Bohrungen 59 im Bereich des ersten Öffnungsabschnitts 75, sodass das zugeführte kryogene Kühlmedium 5 nur auf entsprechend wenige zweite Zuführleitungen 34 verteilt wird. Der Austrittswinkel des kryogenen Kühlmediums 5 ist in dieser Verschiebestellung der ersten Zuführleitung 33 gering, jedoch ausreichend für die Bearbeitung der zylindrischen Lageroberflächen.

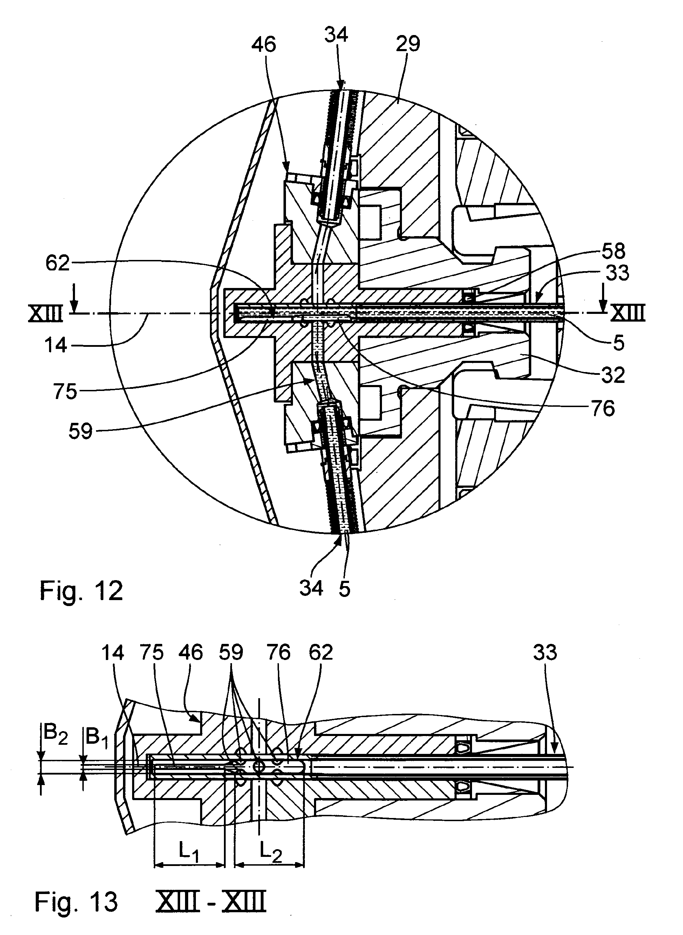

Um den Austrittswinkel des kryogenen Kühlmediums 5 zu vergrößern und so das Werkzeug 13 aufgrund einer größeren Schnittbogenlänge besser kühlen zu können, wird die erste Zuführleitung 33 mittels der Hubeinheit 35 axial verlagert, sodass der zweite Öffnungsabschnitt 76 im Bereich der zweiten Bohrungen 59 liegt. Diese zweite Betriebsstellung der Bearbeitungseinrichtung 3, in der die erste Zuführleitung 33 sich in einer zweiten axialen Verschiebestellung befindet, ist in den Fig. 12 und 13 gezeigt. Aufgrund der deutlich größeren Breite B₂ des zweiten Öffnungsabschnitts 76 liegen nun mehr zweite Bohrungen 59 gleichzeitig im Bereich der Austrittsöffnung 62, sodass entsprechend mehr zweite Zuführleitung 34 gleichzeitig mit dem kryogenen Kühlmedium 5 versorgt werden. Der Austrittswinkel des kryogenen Kühlmediums 5 wird hierdurch vergrößert. Die gekühlten Schneiden decken also einen größeren Kreisbogen des Werkzeugs 13 ab. Dies ist bei der Bearbeitung der Kurbelwellenwangen vorteilhaft, da hier die Schnittbogenlänge stark schwankt und auf die beschriebene Weise die Schneiden entlang des gesamten Schnittbogens gekühlt werden können. Zum definierten Positionieren der ersten Zuführleitung 33 in der Verteilereinheit 46 weist die Hubeinheit 35 zusätzlich ein Längenmesssystem auf, das die Position des Kolbens 37 in dem Zylinder 36 bestimmt. Die Teil-Arbeitsräume 40, 41 sind über Servoventile befüllbar, sodass der Kolben 37 nicht nur die Endstellungen, sondern auch beliebige Zwischenstellungen im Zylinder 36 anfahren kann. Alternativ kann die Hubeinheit 35 als elektrische Antriebseinheit ausgebildet sein.

Vorzugsweise wird bei der Kurbelwellenbearbeitung der Austrittswinkel des kryogenen Kühlmediums 5 kontinuierlich bzw. synchron zu der Drehung der Kurbelwelle 2 geändert. Bei der Bearbeitung der Kurbelwellenwangen wird die zweite axiale Verschiebestellung angesteuert, wohingegen bei der Bearbeitung der zylindrischen Lageroberflächen die erste Verschiebestellung angesteuert wird. Dies kann mittels der Steuereinrichtung 10 erfolgen.

Die Breite der Austrittsöffnung 62 kann sich prinzipiell beliebig über die Länge verändern. Beispielsweise kann die Breite noch feiner gestuft sein oder sich kontinuierlich über die Länge ändern. Hierdurch kann der Austrittswinkel noch feiner verändert werden.

Darüber hinaus kann die Lage des Austrittswinkels durch Verschwenken der ersten Zuführleitung 33 um die Drehachse 14 verändert werden, wie dies im zweiten Ausführungsbeispiel beschrieben ist. Alternativ können die zweiten Zuführleitungen 34 über die zweiten Bohrungen 59 derart in die erste Bohrung 57 münden, dass durch die axiale Verschiebestellung der ersten Zuführleitung 33 auch die Lage des Austrittswinkels beeinflusst werden kann.

Zudem kann die Kühlwirkung durch die Zuflussmenge des kryogenen Kühlmediums 5 gesteuert werden. Hierzu wird die Zuflussmenge über das Servoventil 9 gesteuert.

Mit dem erfindungsgemäßen Bearbeitungssystem bzw. der erfmdungsgemäßen Bearbeitungseinrichtung 3 können somit die Größe des Austrittswinkels des kryogenen Kühlmediums 5 durch axiales Verschieben der ersten Zuführleitung 33 und die Lage des jeweiligen Austrittswinkels durch Verschwenken der ersten Zuführleitung 33 um die Drehachse 14 unabhängig voneinander eingestellt werden, sodass die Verteilung des kryogenen Kühlmediums 5 bzw. die Kühlung des Werkzeugs 13 optimal an die jeweiligen Erfordernisse bei der Kurbelwellenbearbeitung angepasst werden können. Hinsichtlich der weiteren Funktionsweise wird auf die vorangegangenen Ausführungsbeispiele verwiesen.

## Patentansprüche

1. Bearbeitungseinrichtung zum Bearbeiten von Kurbelwellen mit
- einem Gehäuse (11),
- einer an dem Gehäuse (11) angeordneten Antriebseinheit (12) zum Drehantreiben eines Werkzeuges (13), und
- einem Werkzeug (13) zum Bearbeiten von Kurbelwellen (2),
-- das einen scheibenförmigen Grundkörper (29) mit umfangsseitig daran angeordneten Schneideinsätzen (31) aufweist, und
-- das mittels der Antriebseinheit (12) um eine Drehachse (14) drehantreibbar ist,
wobei
- eine erste Zuführleitung (33) für ein kryogenes Kühlmedium (5) konzentrisch zu der Drehachse (14) in dem Gehäuse (11) angeordnet ist,
- das Werkzeug (13) mehrere quer zu der Drehachse (14) verlaufende und zu den Schneideinsätzen (31) führende zweite Zuführleitungen (34) für das kryogene Kühlmedium (5) aufweist, und
- mittels einer Verteilereinheit (46) die erste Zuführleitung (33) mit mindestens einer der zweiten Zuführleitungen (34) zum Zuführen des kryogenen Kühlmediums (5) zu mindestens einem der Schneideinsätze (31) koppelbar ist,
**dadurch gekennzeichnet,**
**dass** die erste Zuführleitung (33) und die zweiten Zuführleitungen (34) jeweils zumindest abschnittsweise thermisch isolierend ausgebildet sind, wobei die erste Zuführleitung (33) und die zweiten Zuführleitungen (33) eine spezifische Wärmeleitfähigkeit bei 0° C von höchstens 0,40 W/(mK) aufweisen, und
**dass** die erste Zuführleitung (33) ein inneres Rohr (47) und ein dieses umgebendes äußeres Rohr (48) aufweist und mindestens eines dieser Rohre (47, 48) in seiner Länge veränderbar ist.

2. Bearbeitungseinrichtung nach Anspruch 1, **dadurch gekennzeichnet, dass** die erste Zuführleitung (33) zumindest abschnittsweise vakuumisoliert ausgebildet ist.

3. Bearbeitungseinrichtung nach Anspruch 1 oder 2, **dadurch gekennzeichnet, dass** die erste Zuführleitung (33) mittels einer Hubeinheit (35) parallel zu der Drehachse (14) verlagerbar ist, wobei die Hubeinheit (35) insbesondere als doppelt wirkende Kolben-Zylinder-Einheit ausgebildet ist.

4. Bearbeitungseinrichtung nach einem der Ansprüche 1 bis 3, **dadurch gekennzeichnet, dass** die erste Zuführleitung (33) mittels einer Antriebseinheit (71) um die Drehachse (14) verschwenkbar ist und die Verteilereinheit (46) die erste Zuführleitung (33) in Abhängigkeit ihrer Schwenkstellung mit verschiedenen zweiten Zuführleitungen (34) koppelt.

5. Bearbeitungseinrichtung nach einem der Ansprüche 1 bis 4, **dadurch gekennzeichnet, dass** die Verteilereinheit (46) konzentrisch zu der Drehachse (14) an dem Grundkörper (29) angeordnet ist und eine konzentrisch zu der Drehachse (14) verlaufende erste Bohrung (57) zum Einführen der ersten Zuführleitung (33) sowie mehrere quer zu der Drehachse (14) verlaufende und in die erste Bohrung (57) mündende zweite Bohrungen (59) zum Einführen der zweiten Zuführleitungen (34) aufweist.

6. Bearbeitungseinrichtung nach Anspruch 5, **dadurch gekennzeichnet, dass** die zweiten Bohrungen (59) in Umfangsrichtung versetzt zueinander in die erste Bohrung (57) münden und die erste Zuführleitung (33) eine umfangsseitig angeordnete Austrittsöffnung (62) für das kryogene Kühlmedium (5) aufweist.

7. Bearbeitungseinrichtung nach einem Anspruch 5 oder 6, **dadurch gekennzeichnet, dass**, die Austrittsöffnung (62) als Langloch ausgebildet ist, dessen Breite sich in Richtung der Drehachse (14) verändert.

8. Bearbeitungseinrichtung nach einem der Ansprüche 5 bis 7, **dadurch gekennzeichnet, dass** die erste Bohrung (57) an einem der ersten Zuführleitung (33) zugewandten Ende trichterförmig ausgebildet ist.

9. Bearbeitungseinrichtung nach einem der Ansprüche 5 bis 8, **dadurch gekennzeichnet, dass** in die erste Bohrung (57) und/oder in die zweiten Bohrungen (59) sich jeweils eine ringförmige Dichtung (58, 63) zum Abdichten der in die zugehörige Bohrung (57, 59) eingeführten Zuführleitung (33, 34) erstreckt.

10. Bearbeitungseinrichtung nach einem der Ansprüche 5 bis 9, **dadurch gekennzeichnet, dass** die Verteilereinheit (46) sich zumindest teilweise in einen an dem Grundkörper (29) angeordneten Anzugsbolzen (32) zum Einspannen des Werkzeuges (13) erstreckt.

11. Bearbeitungseinrichtung nach einem der Ansprüche 1 bis 10, **dadurch gekennzeichnet, dass** die Verteilereinheit (46) aus einem thermisch isolierenden Material, insbesondere aus einem Kunststoffmaterial ausgebildet ist.

12. Bearbeitungseinrichtung nach einem der Ansprüche 1 bis 11, **dadurch gekennzeichnet, dass** die zweiten Zuführleitungen (34) zumindest abschnittsweise vakuumisoliert ausgebildet sind.

13. Bearbeitungseinrichtung nach einem der Ansprüche 1 bis 12, **dadurch gekennzeichnet, dass** die zweiten Zuführleitungen (34) jeweils ein inneres Rohr (67) und ein dieses umgebendes äußeres Rohr (68) aufweisen und mindestens eines dieser Rohre (67, 68) in seiner Länge veränderbar ist.

14. Bearbeitungseinrichtung nach einem der Ansprüche 1 bis 13, **dadurch gekennzeichnet, dass** die zweiten Zuführleitungen (34) jeweils einen ersten Leitungsabschnitt (65) und mehrere damit verbundene zweite Leitungsabschnitte (66) aufweisen, die zu mehreren Schneideinsätzen (31) führen.

15. Bearbeitungssystem zum Bearbeiten von Kurbelwellen mit
- einer Bearbeitungseinrichtung (3) nach einem der Ansprüche 1 bis 14,
- einem thermisch isolierten Speicher (4) zum Bereitstellen eines kryogenen Kühlmediums (5),
- einem Kühlaggregat (6) zum Kühlen des kryogenen Kühlmediums (5), und
- einer thermisch isolierten Versorgungsleitung (8) zum Zuführen des kryogenen Kühlmediums (5) von dem Speicher (4) zu der Bearbeitungseinrichtung (3).

16. Bearbeitungssystem nach Anspruch 15, **dadurch gekennzeichnet, dass** die Zuflussmenge des kryogenen Kühlmediums (5) zu der Bearbeitungseinrichtung (3) mittels eines Ventils (9) einstellbar ist.

## Claims

1. Machining device for machining crankshafts, comprising
- a housing (11),
- a drive unit (12) arranged on the housing (11) for rotationally driving a tool (13), and
- a tool (13) for machining crankshafts (2),
-- having a disk-shaped base body (29) with blade inserts (31) arranged peripherally thereon, and
-- which is rotationally drivable about an axis of rotation (14) by means of the drive unit (12),
wherein
- a first supply line (33) for a cryogenic cooling medium (5) is arranged concentrically to the axis of rotation (14) in the housing (11),
- the tool (13) has a plurality of second supply lines (34) for the cryogenic cooling medium (5) running across the axis of rotation (14) and leading to the blade inserts (31), and
- by means of a distributor unit (46), the first supply line (33) is coupleable with at least one of the second supply lines (34) for supplying the cryogenic cooling medium (5) to at least one of the blade inserts (31),
**characterized**
**in that** the first supply line (33) and the second supply lines (34) are each configured thermally insulating at least in sections, wherein the first supply line (33) and the second supply lines (33) have a specific thermal conductivity at 0°C of at most 0,40 W/(mK), and
**in that** the first supply line (33) has an internal tube (47) and an external tube (48) surrounding it and at least one of these tubes (47, 48) is variable in length.

2. Machining device according to claim 1, **characterized in that** the first supply line (33) is configured vacuum insulated at least in sections.

3. Machining device according to one of claims 1 to 2, **characterized in that** the first supply line (33) is displaceable by means of a shifting unit (35) parallel to the axis of rotation (14), wherein the shifting unit (35) is in particular configured as a double-acting piston-cylinder unit.

4. Machining device according to one of claims 1 to 3, **characterized in that** the first supply line (33) is pivotable by means of a drive unit (71) about the axis of rotation (14) and the distributor unit (71) couples the first supply line (33) to various second supply lines (34) as a function of its pivot position.

5. Machining device according to one of claims 1 to 4, **characterized in that** the distributor unit (46) is arranged concentrically to the axis of rotation (14) on the base body (29) and has a first borehole (57) running concentrically to the axis of rotation (14) for inserting the first supply line (33) as well as a plurality of second boreholes (59) running across the axis of rotation (14) and opening into the first borehole (57) for inserting the second supply lines (34).

6. Machining device according to claim 5, **characterized in that** the second boreholes (59) open into the first borehole (57) in a manner offset from one another in the peripheral direction and the first supply line (33) has an outlet opening (62) arranged circumferentially for the cryogenic cooling medium (5).

7. Machining device according to one of claim 5 or 6, **characterized in that** the outlet opening (62) is designed as an elongated hole, the width of which changes in the direction of the axis of rotation (14).

8. Machining device according to one of claims 5 to 7, **characterized in that** the first borehole (57) is designed to be funnel-shaped at one end which faces the first supply line (33).

9. Machining device according to one of claims 5 to 8, **characterized in that** a ring-shaped seal (58, 63) for sealing the supply line (33, 34) inserted into the respective borehole (57, 59) each extends into the first borehole (57) and/or into the second boreholes (59).

10. Machining device according to one of claims 5 to 9, **characterized in that** the distributor unit (46) extends at least partially into a bolt (32) arranged on the base body (29) for clamping the tool (13).

11. Machining device according to one of claims 1 to 10, **characterized in that** the distributor unit (46) is made of a thermally insulating material, in particular of a plastic material.

12. Machining device according to one of claims 1 to 11, **characterized in that** the second supply lines (34) are configured vacuum insulated at least in sections.

13. Machining device according to one of claims 1 to 12, **characterized in that** the second supply lines (34) each have an internal tube (67) and an external tube (68) surrounding it and at least one of these tubes (67, 68) is variable in its length.

14. Machining device according to one of claims 1 to 13, **characterized in that** the second supply lines (34) each have a first line section (65) and a plurality of second line sections (66) connected thereto, which lead to a plurality of blade inserts (31).

15. Machining system for machining crankshafts with
- a machining device (3) according to one of claims 1 to 14,
- a thermally insulated storage device (4) for providing a cryogenic cooling medium (5),
- a cooling unit (6) for cooling the cryogenic cooling medium (5) and,
- a thermally insulated supply line (8) for supplying the cryogenic cooling medium (5) from the storage device (4) to the machining device (3).

16. Machining system according to claim 15, **characterized in that** the flow rate of the cryogenic cooling medium (5) to the machining device (3) is adjustable by means of a valve (9).

## Revendications

1. Dispositif d'usinage servant à usiner des vilebrequins, comprenant
- un boîtier (11),
- une unité d'entraînement (12) disposée au niveau du boîtier (11), servant à entraîner en rotation un outil (13), et
- un outil (13) servant à usiner des vilebrequins (2),
-- qui présente un corps de base (29) en forme de disque, pourvu d'inserts de coupe (31) disposés au niveau dudit corps de base sur le côté périphérique, et
-- qui peut être entraîné en rotation autour d'un axe de rotation (14) au moyen de l'unité d'entraînement (12),
sachant
- qu'une première conduite d'amenée (33) destinée à un liquide cryogénique (5) est disposée de manière concentrique par rapport à l'axe de rotation (14) dans le boîtier (11),
- que l'outil (13) présente plusieurs deuxièmes conduites d'amenée (34) destinées au liquide cryogénique (5), s'étendant de manière transversale par rapport à l'axe de rotation (14) et menant aux inserts de coupe (31), et
- et que la première conduite d'amenée (33) peut être couplée, au moyen d'une unité de distribution (46), à au moins une des deuxièmes conduites d'amenée (34) servant à amener le liquide cryogénique (5) à au moins un des inserts de coupe (31),
**caractérisé en ce**
**que** la première conduite d'amenée (33) et les deuxièmes conduites d'amenée (34) sont réalisées respectivement au moins par endroits avec une isolation thermique, sachant que la première conduite d'amenée (33) et les deuxièmes conduites d'amenée (33) présentent une conductivité thermique spécifique à 0 °C de maximum 0,40 W/(mK), et
en ce que la première conduite d'amenée (33) présente un tube intérieur (47) et un tube extérieur (48) entourant ce dernier et en ce que la longueur d'au moins un desdits tubes (47, 48) peut être modifiée.

2. Dispositif d'usinage selon la revendication 1, **caractérisé en ce que** la première conduite d'amenée (33) est réalisée au moins par endroits de manière isolée par le vide.

3. Dispositif d'usinage selon la revendication 1 ou 2, **caractérisé en ce que** la première conduite d'amenée (33) peut être déplacée de manière parallèle par rapport à l'axe de rotation (14) au moyen d'une unité de levage (35), sachant que l'unité de levage (35) est réalisée en particulier sous la forme d'une unité piston-cylindre à action double.

4. Dispositif d'usinage selon l'une quelconque des revendications 1 à 3, **caractérisé en ce que** la première conduite d'amenée (33) peut pivoter autour de l'axe de rotation (14) au moyen d'une unité d'entraînement (71), et **en ce que** l'unité de distribution (46) couple la première conduite d'amenée (33), en fonction de sa position de pivotement, aux différentes deuxièmes conduites d'amenée (34).

5. Dispositif d'usinage selon l'une quelconque des revendications 1 à 4, **caractérisé en ce que** l'unité de distribution (46) est disposée de manière concentrique par rapport à l'axe de rotation (14) au niveau du corps de base (29) et présente un premier alésage (57) s'étendant de manière concentrique par rapport à l'axe de rotation (14), servant à introduire la première conduite d'amenée (33) ainsi que plusieurs deuxièmes alésages (59) s'étendant de manière transversale par rapport à l'axe de rotation (14), débouchant dans le premier alésage (57), servant à introduire les deuxièmes conduites d'amenée (34).

6. Dispositif d'usinage selon la revendication 5, **caractérisé en ce que** les deuxièmes alésages (59) débouchent dans le premier alésage (57) selon un décalage les uns par rapport aux autres dans le sens de la périphérie, et **en ce que** la première conduite d'amenée (33) présente une ouverture de sortie (62) disposée côté périphérie destinée au liquide cryogénique (5).

7. Dispositif d'usinage selon la revendication 5 ou 6, **caractérisé en ce que** l'ouverture de sortie (62) est réalisée sous la forme d'un trou oblong, dont la largeur varie dans le sens de l'axe de rotation (14).

8. Dispositif d'usinage selon l'une quelconque des revendications 5 à 7, **caractérisé en ce que** le premier alésage (57) est réalisé de manière à présenter une forme d'entonnoir au niveau d'une extrémité tournée vers la première conduite d'amenée (33).

9. Dispositif d'usinage selon l'une quelconque des revendications 5 à 8, **caractérisé en ce que** respectivement un joint d'étanchéité (58, 63) de forme annulaire servant à étanchéifier la conduite d'amenée (33, 34) introduite dans l'alésage (57, 59) associé s'étend dans le premier alésage (57) et/ou dans les deuxièmes alésages (59).

10. Dispositif d'usinage selon l'une quelconque des revendications 5 à 9, **caractérisé en ce que** l'unité de distribution (46) s'étend au moins en partie dans un embout de tirage (32) disposé au niveau du corps de base (29), servant à enserrer l'outil (13).

11. Dispositif d'usinage selon l'une quelconque des revendications 1 à 10, **caractérisé en ce que** l'unité de distribution (46) est réalisée à partir d'un matériau à isolation thermique, en particulier à partir d'un matériau en plastique.

12. Dispositif d'usinage selon l'une quelconque des revendications 1 à 11, **caractérisé en ce que** les deuxièmes conduites d'amenée (34) sont réalisées au moins en partie de manière isolée par le vide.

13. Dispositif d'usinage selon l'une quelconque des revendications 1 à 12, **caractérisé en ce que** les deuxièmes conduites d'amenée (34) présentent respectivement un tube intérieur (67) et un tube extérieur (68) entourant ce dernier, et **en ce que** la longueur d'au moins un desdits tubes (67, 68) peut être modifiée.

14. Dispositif d'usinage selon l'une quelconque des revendications 1 à 13, **caractérisé en ce que** les deuxièmes conduites d'amenée (34) présentent respectivement une première section de conduite (65) et plusieurs deuxièmes sections de conduite (66) reliées à cette dernière, lesquelles mènent à plusieurs inserts de coupe (31).

15. Système d'usinage servant à usiner des vilebrequins, comprenant
- un dispositif d'usinage (3) selon l'une quelconque des revendications 1 à 14,
- un accumulateur (4) isolé thermiquement servant à fournir un liquide cryogénique (5),
- un module de refroidissement (6) servant à refroidir le liquide cryogénique (5), et
- une conduite d'alimentation (8) isolée thermiquement servant à amener le liquide cryogénique (5) de l'accumulateur (4) au dispositif d'usinage (3).

16. Système d'usinage selon la revendication 15, **caractérisé en ce que** la quantité de liquide cryogénique (5) amenée au dispositif d'usinage (3) peut être réglée au moyen d'une soupape (9).
